# EUROPÄISCHE PATENTSCHRIFT

(11) **EP 3 798 069 B1**
(45) Veröffentlichungstag und Bekanntmachung des Hinweises auf die Patenterteilung: **08.11.2023**
(21) Anmeldenummer: 20197119.9
(22) Anmeldetag: 21.09.2020
(51) Int. Cl.: B60S 1/34

(54) **WISCHERVORRICHTUNG, SOWIE VERFAHREN ZUM HERSTELLEN EINER WISCHERVORRICHTUNG**
WIPER DEVICE AND METHOD FOR MANUFACTURING A WIPER DEVICE
DISPOSITIF ESSUIE-GLACE AINSI QUE PROCÉDÉ DE FABRICATION D'UN DISPOSITIF ESSUIE-GLACE

(30) Priorität: 24.09.2019 DE 102019214530
(43) Veröffentlichungstag der Anmeldung: 31.03.2021
(73) Patentinhaber: Robert Bosch GmbH, 70442 Stuttgart (DE)
(72) Erfinder: Djordjevic, Nenad, 21000 Novi Sad (RS); Mrakovic, Nemanja, 22300 Stara Pazova (RS); Pjescic, Ilija, 11070 Belgrad (RS)

(56) Entgegenhaltungen:
- EP-A1- 0 316 832
- EP-A2- 2 455 264
- FR-A1- 3 063 315
- JP-A- 2011 037 352

## Beschreibung

Die vorliegende Erfindung betrifft eine Wischervorrichtung, insbesondere Scheibenwischervorrichtung, mit einer in einer Lagerbuchse drehbar aufgenommenen Wischerwelle und mit einem Positionierungselement, welches dazu vorgesehen ist die Position der Wischerwelle in der Lagerbuchse zu sichern.

### Stand der Technik

Es sind Wischervorrichtungen bekannt, die eine Lagerbuchse aufweisen in die eine Wischerwelle eingebracht ist. Dabei wird die Wischerwelle durch ein Positionierungselement in der Lagerbuchse axial positioniert. FR-A-3063315 offenbart den Oberbegriffen der Ansprüche 1 und 6.

### Offenbarung der Erfindung

Die vorliegende Erfindung mit den Merkmalen des Hauptanspruchs hat demgegenüber den Vorteil, dass das Positionierungselement an die Wischerwelle gecrimpt ist, wodurch eine verbesserte Verbindung zwischen dem Positionierungselement und der Wischerwelle ermöglicht wird und zudem die Herstellungskosten reduziert werden können.

Durch die in den Unteransprüchen aufgeführten Merkmale sind vorteilhafte Weiterbildungen der Erfindung nach dem Hauptanspruch möglich. So ist es vorteilhaft, wenn das Positionierungselement formschlüssig an die Wischerwelle gecrimpt ist, wodurch eine besonders gute Verbindung mit der Wischerwelle ermöglicht wird.

Vorteilhaft ist es auch, wenn an der Wischerwelle eine aufgeraute, insbesondere gerändelte, Struktur ausgebildet ist, wodurch die Verbindung zwischen dem Positionierungselement und der Wischerwelle zusätzlich verbessert werden kann.

Nach der Erfindung ist zwischen der Wischerwelle und dem Positionierungselement ein, insbesondere die Wischerwelle umlaufendes, Dichtungselement angeordnet , wodurch der Korrosionsschutz verbessert werden kann.

Auch ist es von Vorteil, wenn das Positionierungselement (50), insbesondere an einer Innenfläche, ein Dichtungselement aufweist, wodurch ebenfalls der Korrosionsschutz verbessert werden kann und zudem die Herstellungskosten aufgrund einer vereinfachten Montage geringgehalten werden können.

Besonders vorteilhaft ist es, wenn es sich bei dem Dichtungselement um einen Dichtungsring, insbesondere einen O-Ring, handelt, wodurch der Korrosionsschutz besonders effektiv verbessert werden kann.

Die Erfindung betrifft auch ein Verfahren zur Herstellung einer Wischervorrichtung, insbesondere einer Wischervorrichtung nach der vorhergehenden Beschreibung, mit einer in einer Lagerbuchse drehbar aufgenommenen Wischerwelle und mit einem Positionierungselement, welches dazu vorgesehen ist die Position der Wischerwelle in der Lagerbuchse zu sichern. Das Verfahren hat den Vorteil, dass das Positionierungselement (50) an die Wischerwelle (30) gecrimpt wird, wodurch eine verbesserte Verbindung zwischen dem Positionierungselement und der Wischerwelle hergestellt werde kann und zudem die Herstellungskosten reduziert werden können.

Vorteilhaft ist es auch, wenn die Wischerwelle gerädelt wird, wodurch die Verbindung zwischen dem Positionierungselement und der Wischerwelle zusätzlich verbessert werden kann.

Nach der Erfindung ist zwischen der Wischerwelle und dem Positionierungselement ein Dichtungselement angeordnet, wodurch der Korrosionsschutz verbessert werden kann.

Außerdem ist es von Vorteil, wenn an das Positionierungselement ein Dichtungselement angeordnet wird, wodurch ebenfalls der Korrosionsschutz verbessert werden kann und zudem Herstellung vereinfacht und schneller erfolgen kann.

### Zeichnungen

In den Zeichnungen sind Ausführungsbeispiele der Erfindung schematisch dargestellt und in der nachfolgenden Beschreibung näher erläutert. Es zeigen
- Fig. 1: eine schematische Darstellung einer Wischervorrichtung in einem Kraftfahrzeug,
- Fig. 2: eine perspektivische Darstellung einer Wischervorrichtung,
- Fig. 3: eine Explosionsdarstellung einer Wischerwelle mit einer Lagerbuchse,
- Fig. 4: eine Explosionsdarstellung einer weiteren Wischerwelle mit einer Lagerbuchse,
- Fig. 5: einen schematischen Querschnitt einer Wischerwelle in einer Lagerbuchse,
- Fig. 6: einen Ausschnitt eines schematischen Querschnitts einer Wischerwelle in einer Lagerbuchse im Bereich des Positionierungselements,
- Fig. 7: einen Ausschnitt eines schematischen Querschnitts eines Ausführungsbeispiels einer Wischerwelle in einer Lagerbuchse im Bereich des Positionierungselements,
- Fig. 8: einen Ausschnitt eines schematischen Querschnitts eines weiteren Ausführungsbeispiels einer Wischerwelle in einer Lagerbuchse im Bereich des Positionierungselements,
- Fig. 9: einen Ausschnitt eines schematischen Querschnitts eines weiteren Ausführungsbeispiels einer Wischerwelle in einer Lagerbuchse im Bereich des Positionierungselements.

### Beschreibung der Ausführungsbeispiele

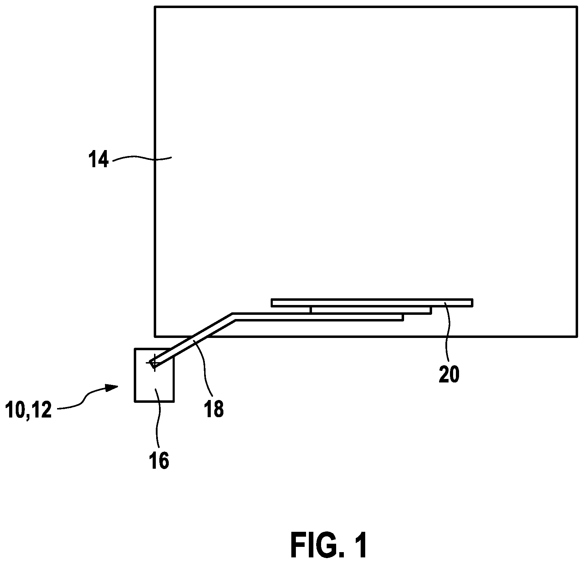

In Fig. 1 ist eine schematische Darstellung einer Wischervorrichtung 10, im vorliegenden Fall einer Scheibenwischervorrichtung 12, für ein Kraftfahrzeug gezeigt, über die eine Fahrzeugscheibe 14, bei der es sich um eine Frontscheibe oder eine Heckscheibe handeln kann, gereinigt werden kann. Die Wischervorrichtung 10 umfasst eine Antriebseinrichtung 16, die einen Wischerarm 18 in eine pendelnde Drehbewegung versetzt, wobei der Wischerarm 18 ein Wischerblatt 20 trägt, das auf der Fahrzeugscheibe 14 aufliegt. Die Antriebseinrichtung 16 umfasst einen elektrischen Antriebsmotor sowie ein Getriebe mit einer Wischerwelle, mit der der Wischerarm 18 gekoppelt ist. Der Motor versetzt über das Getriebe die Wischerwelle in die Drehpendelbewegung, welche auch von dem Wischarm 18 einschließlich Wischerblatt 20 ausgeführt wird.

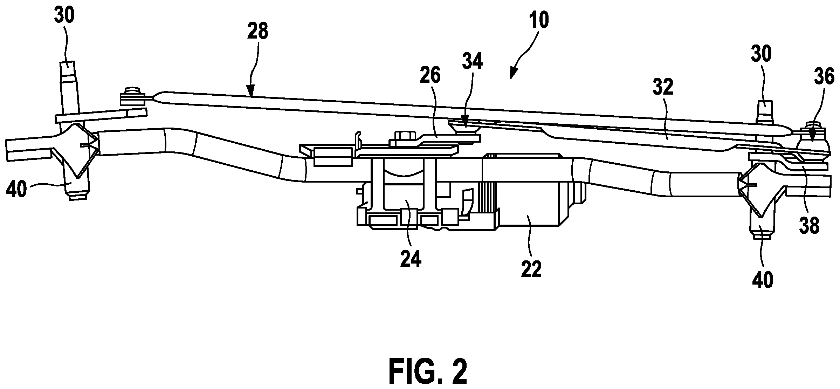

In Fig. 2 ist eine perspektivische Darstellung einer Wischervorrichtung 10 gezeigt. Gemäß Fig. 2 weist die Wischervorrichtung 10 einen elektrischen Antriebsmotor 22 auf, dem ein Getriebe 24 zur Bewegungsuntersetzung nachgeordnet ist, wobei das Getriebe 24 eine Motorkurbel 26 antreibt, die mit einem Wischergestänge 28 gekoppelt ist. Das Wischergestänge 28 versetzt zwei Wischerwellen 30, auf die jeweils ein Wischblatt 20 aufsetzbar ist, in die pendelnde Drehbewegung. Teil des Wischer- bzw. Kurbelgestänges 28 ist eine Gelenkstange 32, die im Bereich beider Stirnseiten über Gelenke 34 bzw. 36 mit der Motorkurbel 26 bzw. einer Wischerkurbel 38 gekoppelt ist, welche anderen Endes mit der Wischerwelle 10 verbunden ist.

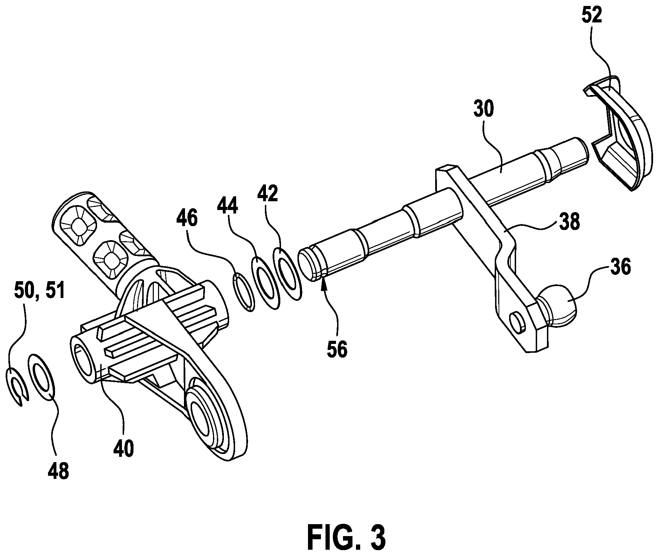

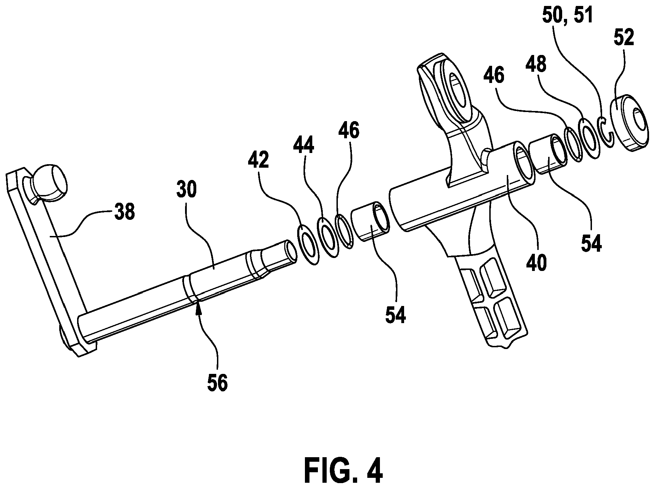

Die Wischerwellen 30 sind jeweils in einer Lagerbuchse 40 drehbar aufgenommen. Entsprechend ist in Fig. 3 und 4 jeweils eine Explosionsdarstellung einer Wischerwelle 30 mit einer Lagerbuchse 40 gezeigt. In Fig. 3 ist dabei, entsprechend Fig. 2, ein Ausführungsbeispiel einer Wischerwelle 30 mit einer Lagerbuchse 40 gezeigt, bei dem die Wischerkurbel 38 an der Wischerwelle 40 an einer dem Wischerarm 18 zugewandten Seite der Lagerbuchse 40, bzw. einer Frontseite, angeordnet ist. In Fig. 4 wiederum ist eine Wischerwelle 30 mit einer Lagerbuchse 40 gezeigt, bei der die Wischerkurbel 38 an der Wischerwelle 40 an einer dem Wischerarm 18 abgewandten Seite der Lagerbuchse 40, bzw. einer Rückseite, angeordnet ist. In beiden Varianten weisen die Anordnungen jeweils eine Federscheibe 42, eine Druckscheibe 44, einen O-Ring 46, eine Unterlagscheibe 48, ein Positionierungselement 50 und eine Abdeckkappe 52 auf. Je nach Variante unterscheidet sich dabei die Reihenfolge der Anordnung der einzelnen Bauteile gemäß den Fig. 3 und 4, wobei die zweite Variante aus Fig. 4, im Vergleich zur ersten Variante aus Fig. 3, zwei O-Ringe 46 und zusätzliche zwei Buchsen 54 aufweist.

Sowohl in Fig. 3, als auch in Fig. 4, wird die Wischerwelle 30 in die Lagerbuchse 40 drehbar angeordnet, wobei das Positionierungselement 50 dazu vorgesehen ist die Wischerwelle 30 gegenüber der Lagerbuchse 40 axial zu positionieren. Dazu weist die Wischerwelle in den gezeigten Ausführungsbeispielen jeweils eine umlaufende Nut 56 auf, wobei das Positionierungselement 50 korrespondierend zu der umlaufenden Nut 56, in den vorliegenden Fällen als c-förmiger Clip 58, ausgebildet ist. Die umlaufende Nut 56 ist in den gezeigten Fällen jeweils auf einer von der Wischerkurbel 38 abgewandten Seite an der Wischerwelle 30 ausgebildet. So wird in den gezeigten Ausführungsbeispielen die Wischerwelle 30 in die Lagerbuchse 40 bis zum Anschlag an die Wischerkurbel 38 eingeführt und der c-förmige Clip 51 lateral in die umlaufende Nut 56 eingeclipst. Entsprechend ist dann die Lagebuchse zwischen dem c-förmigen Clip 51 und der Wischerkurbel 38 angeordnet, wodurch wiederum die Wischerwelle 30 in axialer Richtung gegenüber der Lagerbuchse 40 positioniert ist.

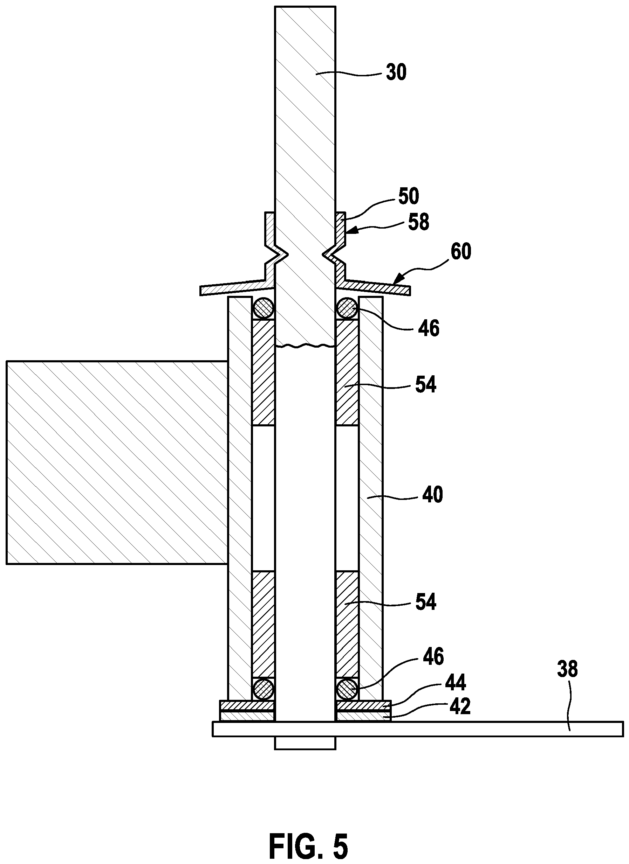

In Fig. 5 ist nun ein schematischer Querschnitt einer Wischerwelle 30 in einer Lagerbuchse 40 gezeigt. Das Beispiel hat nun den Vorteil, dass das Positionierungselement 50 an die Wischerwelle 30 gecrimpt ist. Dadurch wird die Verbindung zwischen dem Positionierungselement 50 und der Wischerwelle 30 verbessert.

Das Positionierungselement 50 weist einen im Wesentlichen zylindrischen Bereich 58 auf. Während der Herstellung wird das Positionierungselement 50 in axialer Richtung über die Wischerwelle 30 aufgesetzt, so dass es die Wischerwelle 30 radial umgibt. Daraufhin wird das Positionierungselement 50 mittels eines Crimpwerkzeugs, insbesondere einer Crimpzange, in dem zylindrschen Bereich 58 an die Wischerwelle 30 gecrimpt. Darüber hinaus weist das Positionierungselement 50 einen umlaufenden Vorsprung 60 auf, welcher die Lagerbuchse 40 bei Draufsicht in axialer Richtung im Wesentlichen verdeckt und schützt.

Das in dem Beispiel gezeigte Positionierungselement 50 ersetzt nun den c-förmigen Clip 58, eine Unterlagscheibe 48 und die Abdeckkappe 58 (vgl. Fig. 3 und 4) und vereint dessen Vorteile, wodurch die Teilevielfalt und damit auch die Materialkosten reduziert werden. Zudem ist es nicht notwendig eine umlaufende Nut 56 (vgl. Fig. 3 und 4) auszubilden, wodurch die Verfahrensschritte reduziert und damit das Verfahren zur Herstellung vereinfacht wird. Auch kann dieses entsprechend schneller erfolgen.

In dem vorliegenden Fall ist das Positionierungselement 50 formschlüssig an die Wischerwelle 30 gecrimpt, wodurch eine besonders gute Verbindung mit der Wischerwelle 30 ermöglicht wird.

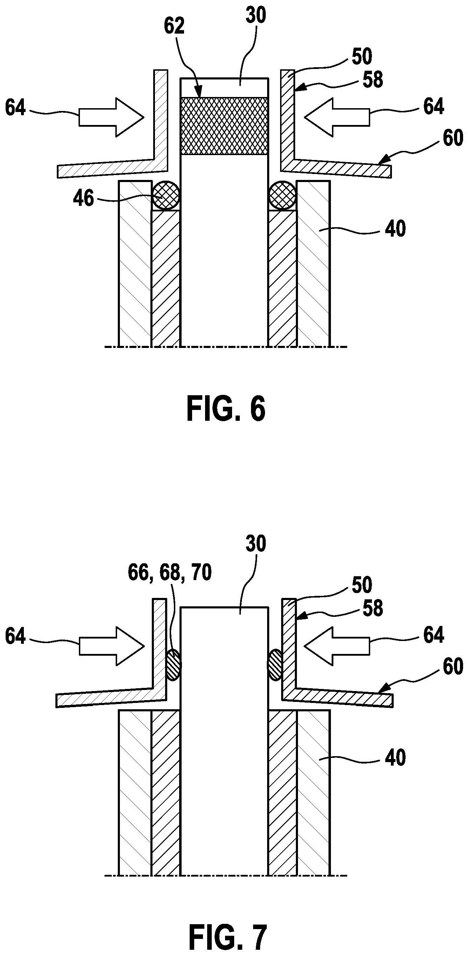

In Fig. 6 ist ein Ausschnitt eines schematischen Querschnitts einer Wischerwelle 30 in einer Lagerbuchse 40 im Bereich des Positionierungselements 50 gezeigt. Dabei befindet sich das Positionierungselement 50 in einem Zustand vor der Montage, bzw. dem Crimpen, an die Wischerwelle 30. Man kann erkennen, dass an der Wischerwelle 30 eine aufgeraute, im vorliegenden Fall eine gerändelte, Struktur 62 ausgebildet ist. In einem Verfahrensschritt wird dann das Positionierungselement 50 an die Wischerwelle 30 im Bereich der aufgerauten, bzw. gerädelten, Struktur 62 gecrimpt. Dies wird durch die Pfeile 64 angedeutet. Durch die aufgeraute, bzw. gerädelte, Struktur 62 wird die Reibfläche zwischen dem Positionierungselement 50 und der Wischerwelle 30 erhöht, wodurch wiederum eine verbesserte Übertragung wechselnder Momente ermöglicht wird. Entsprechend wird durch die aufgeraute, bzw. gerädelte, Struktur 62 eine zusätzlich verbesserte Verbindung zwischen dem Positionierungselement 50 und der Wischerwelle 30 ermöglicht.

In Fig. 7 bis 9 ist jeweils einen Ausschnitt eines schematischen Querschnitts eines Ausführungsbeispiels einer Wischerwelle 30 in einer Lagerbuchse 40 im Bereich des Positionierungselements 50 gezeigt. Dabei befindet sich das Positionierungselement 50 ebenfalls in einem Zustand vor der Montage, bzw. dem Crimpen, an die Wischerwelle 30. In allen Ausführungsbeispielen wird ebenfalls mittels der Pfeile 64 angedeutet, dass das Positionierungselement 50 an die Wischerwelle 30 gekrimpt wird. Darüber hinaus erkennt man, dass jeweils zwischen der Wischerwelle 30 und dem Positionierungselement 50 ein, in den gezeigten Fällen ein die Wischerwelle 30 umlaufendes, Dichtungselement 66 angeordnet ist. Dadurch wird der Korrosionsschutz für die die Lagerbuchse 40 verbessert. So wird beispielsweise vermieden, dass Wasser zwischen der Wischerwelle 30 und dem Positionierungselement 50 bis zur Lagerbuchse 40 eindringen kann. Darüber hinaus kann dadurch auf den in der Lagebuchse 40 angeordneten O-Ring 46 (vgl. Fig. 3, 4 und 6) verzichtet werden, wodurch wiederum die Teilevielfalt reduziert wird.

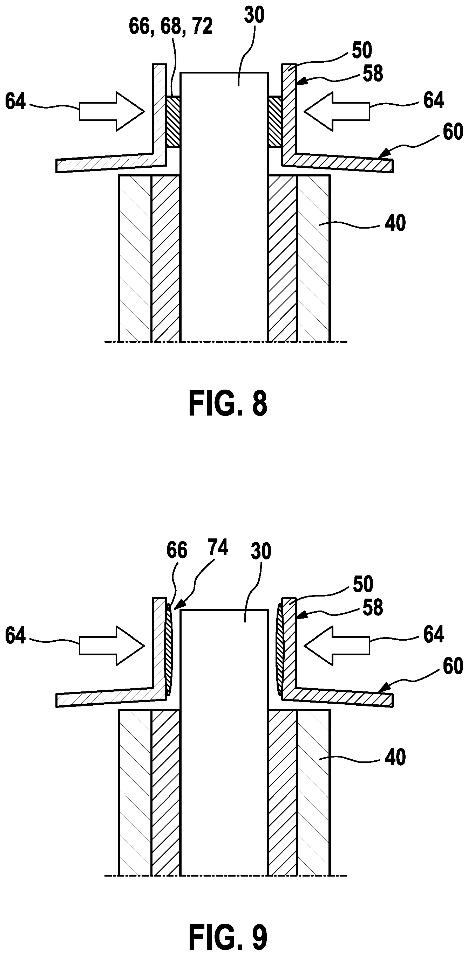

In den in Fig. 7 und Fig. 8 gezeigten Ausführungsbeispielen handelt es sich bei dem Dichtungselement 66 jeweils um einen Dichtungsring 68, welcher während der Montage relativ schnell in die Anordnung eingebracht werden kann.

In dem in Fig. 7 gezeigten Ausführungsbeispiel handelt es sich bei dem Dichtungselement 66, bzw. dem Dichtungsring 68, um einen O-Ring 70. Dieser kann während der Herstellung besonders einfach in axialer Richtung über die Wischerwelle 30 aufgerollt werden. Dadurch wird eine besonders einfache und schnelle Montage ermöglicht.

In dem in Fig. 8 gezeigten Ausführungsbeispiel handelt es sich bei dem Dichtungselement 66, bzw. dem Dichtungsring 68, um ein die Wischerwelle 30 flächig ummantelnden Dichtungsring 72. Dieser bietet eine höhere Kontaktfläche für die Wischerwelle 30 und das zu crimpende Positionierungselement 50, wodurch eine besonders gute Dichtheit hergestellt werden kann

In dem in Fig. 7 gezeigten Ausführungsbeispiel weist das Positionierungselement 50, insbesondere an einer Innenfläche 74, das Dichtungselement 66 auf. So bildet das Dichtungselement 66 mit dem Positionierungselement 50 eine Einheit, wodurch eine separate Montage des Dichtungselements 66 entfällt und dadurch das Verfahren zur Herstellung schneller erfolgen kann. In dem gezeigten Ausführungsbeispiel wird das Positionierungselement 50 entsprechend mit einem Material des Dichtungselement 66 beschichtet, so dass sich an der gewünschten Stelle das Dichtungselement 66 ausbildet. Alternativ wäre es aber auch möglich, dass das Dichtungselement 66 als ein radial nach außen drückender Dichtungsring an die Innenfläche 74 des Positionierungselements 50 gebracht, bzw. in das Positionierungselement 50 eingebracht, wird.

## Patentansprüche

1. Wischervorrichtung (10), insbesondere Scheibenwischervorrichtung (12), mit einer in einer Lagerbuchse (40) drehbar aufgenommenen Wischerwelle (30) und mit einem Positionierungselement (50), welches dazu vorgesehen ist die Position der Wischerwelle (30) in der Lagerbuchse (40) zu sichern, wobei das Positionierungselement (50) an die Wischerwelle (30) gecrimpt ist, **dadurch gekennzeichnet, dass** zwischen der Wischerwelle (30) und dem Positionierungselement (50) ein, insbesondere die Wischerwelle (30) umlaufendes, Dichtungselement (66) angeordnet ist.

2. Wischervorrichtung (10) nach Anspruch 1, **dadurch gekennzeichnet, dass** das Positionierungselement (50) formschlüssig an die Wischerwelle (30) gecrimpt ist.

3. Wischervorrichtung (10) nach einem der vorhergehenden Ansprüche, **dadurch gekennzeichnet, dass** an der Wischerwelle (30) eine aufgeraute, insbesondere gerändelte, Struktur (62) ausgebildet ist.

4. Wischervorrichtung (10) nach einem der vorhergehenden Ansprüche, **dadurch gekennzeichnet, dass** das Positionierungselement (50), insbesondere an einer Innenfläche (74), das Dichtungselement (66) aufweist.

5. Wischervorrichtung (10) nach einem der vorhergehenden Ansprüche, **dadurch gekennzeichnet, dass** es sich bei dem Dichtungselement (66) um einen Dichtungsring (68), insbesondere einen O-Ring (70), handelt.

6. Verfahren zur Herstellung einer Wischervorrichtung (10), insbesondere einer Wischervorrichtung (10) nach einem der vorhergehenden Ansprüche, mit einer in einer Lagerbuchse (40) drehbar aufgenommenen Wischerwelle (30) und mit einem Positionierungselement (50), welches dazu vorgesehen ist die Position der Wischerwelle (30) in der Lagerbuchse (40) zu sichern, wobei das Positionierungselement (50) an die Wischerwelle (30) gecrimpt wird, **dadurch gekennzeichnet, dass** zwischen der Wischerwelle (30) und dem Positionierungselement (50) ein Dichtungselement (66) angeordnet wird.

7. Verfahren nach Anspruch 6, **dadurch gekennzeichnet, dass** die Wischerwelle (30) gerädelt wird.

8. Verfahren nach einem der Ansprüche 6 oder 7, **dadurch gekennzeichnet, dass** an das Positionierungselement (50) ein Dichtungselement (66) angeordnet wird.

## Claims

1. Wiper device (10), in particular windscreen-wiper device (12), having a wiper shaft (30) which is rotatably received in a bearing bush (40), and having a positioning element (50) which is provided to secure the position of the wiper shaft (30) in the bearing bush (40), wherein the positioning element (50) is crimped to the wiper shaft (30), **characterized in that** a sealing element (66) which in particular encircles the wiper shaft (30) is disposed between the wiper shaft (30) and the positioning element (50).

2. Wiper device (10) according to Claim 1, **characterized in that** the positioning element (50) is crimped to the wiper shaft (30) in a form-fitting manner.

3. Wiper device (10) according to either of the preceding claims, **characterized in that** a roughened, in particular knurled, structure (62) is configured on the wiper shaft (30).

4. Wiper device (10) according to one of the preceding claims, **characterized in that** the positioning element (50), in particular on an internal face (74), comprises the sealing element (66).

5. Wiper device (10) according to one of the preceding claims, **characterized in that** the sealing element (66) is an annular seal (68), in particular an O-ring (70).

6. Method for producing a wiper device (10), in particular a wiper device (10) according to one of the preceding claims, having a wiper shaft (30) which is rotatably received in a bearing bush (40), and having a positioning element (50) which is provide to secure the position of the wiper shaft (30) in the bearing bush (40), wherein the positioning element (50) is crimped to the wiper shaft (30), **characterized in that** a sealing element (66) is disposed between the wiper shaft (30) and the positioning element (50).

7. Method according to Claim 6, **characterized in that** the wiper shaft (30) is knurled.

8. Method according to either of Claims 6 and 7, **characterized in that** a sealing element (66) is disposed on the positioning element (50).

## Revendications

1. Dispositif d'essuie-glace (10), notamment dispositif d'essuie-glace de vitre (12), avec un arbre d'essuie-glace (30) logé de manière rotative dans un coussinet (40) et avec un élément de positionnement (50) qui est prévu pour bloquer la position de l'arbre d'essuie-glace (30) dans le coussinet (40), l'élément de positionnement (50) étant serti sur l'arbre d'essuie-glace (30), **caractérisé en ce qu'**entre l'arbre d'essuie-glace (30) et l'élément de positionnement (50) est agencé un élément d'étanchéité (66), notamment entourant l'arbre d'essuie-glace (30).

2. Dispositif d'essuie-glace (10) selon la revendication 1, **caractérisé en ce que** l'élément de positionnement (50) est serti par complémentarité de forme sur l'arbre d'essuie-glace (30).

3. Dispositif d'essuie-glace (10) selon l'une quelconque des revendications précédentes, **caractérisé en ce qu'**une structure rugueuse, notamment moletée (62), est formée sur l'arbre d'essuie-glace (30).

4. Dispositif d'essuie-glace (10) selon l'une quelconque des revendications précédentes, **caractérisé en ce que** l'élément de positionnement (50) présente l'élément d'étanchéité (66), notamment sur une surface intérieure (74).

5. Dispositif d'essuie-glace (10) selon l'une quelconque des revendications précédentes, **caractérisé en ce que** l'élément d'étanchéité (66) consiste en une bague d'étanchéité (68), notamment un joint torique (70).

6. Procédé de fabrication d'un dispositif d'essuie-glace (10), notamment d'un dispositif d'essuie-glace (10) selon l'une quelconque des revendications précédentes, avec un arbre d'essuie-glace (30) logé de manière rotative dans un coussinet (40) et avec un élément de positionnement (50) qui est prévu pour bloquer la position de l'arbre d'essuie-glace (30) dans le coussinet (40), l'élément de positionnement (50) étant serti sur l'arbre d'essuie-glace (30), **caractérisé en ce qu'**entre l'arbre d'essuie-glace (30) et l'élément de positionnement (50) est agencé un élément d'étanchéité (66) .

7. Procédé selon la revendication 6, **caractérisé en ce que** l'arbre d'essuie-glace (30) est moleté.

8. Procédé selon l'une quelconque des revendications 6 ou 7, **caractérisé en ce qu'**un élément d'étanchéité (66) est agencé sur l'élément de positionnement (50).
